# EUROPEAN PATENT APPLICATION

(11) **EP 4 407 153 A1**
(43) Date of publication of application: **31.07.2024**
(21) Application number: 23153698.8
(22) Date of filing: 27.01.2023
(51) Int. Cl.: F01N 3/00, F28F 13/00, B01J 35/04, B01J 35/00, F01N 3/20

(54) **ELECTRICALLY HEATED METAL FOAM COMPONENT AND REACTOR DEVICE INCLUDING AN ELECTRICALLY HEATED METAL FOAM ELEMENT**

(71) Applicant: Alantum Europe GmbH, 81541 München (DE)
(72) Inventor: Fröhlich, Stefan, 86559 Adelzhausen (DE); Torkuhl, Lars, 80809 München (DE); Gerstle, Alexandra, 85764 Oberschleißheim (DE)
(74) Representative: Manitz Finsterwald Patent- und Rechtsanwaltspartnerschaft mbB

(57) **Abstract**

The present invention relates to an electrically heatable metal foam component, comprising metal foam material having at least one contacting section, for electrically contacting the metal foam material, at least one transition section and at least one heat transfer section, wherein the transition section is arranged between the contacting section and the heat transfer section, wherein in the contacting section the metal foam material is densified in comparison to the heat transfer section, and wherein in the transition section the degree of densification changes from the degree of densification in the contacting section towards the metal foam material in the heat transfer section.

## Description

The present invention concerns an electrically heated metal foam component (EHC), and a reactor device, including an electrically heated metal foam component.

In many chemical processes there's a need to supply energy to the reaction medium. Be it to reach the light off point of an exothermic reaction faster or to provide the high energy demand for endothermic processes. The speed of chemical reactions can be increased by the supply of energy. The higher the temperature of a reaction system, the greater the probability that reactants will overcome the activation energy barrier and react to the desired product.

The required energy can be supplied to the system in the form of heat. The transport of heat to the reaction site within the reactor is always based on at least one of heat conduction, convection and radiation. Heat transport within solids, such as the reactor wall or reactor packing, is primarily based on thermal conduction. In a flowing medium heat energy is transferred by entrainment and movement of larger material aggregates. Within the fluid, heat transport by convection is superimposed on heat transport by conduction. Transport of heat by radiation utilizes electromagnetic radiation and therefore does not require a transfer medium. It occurs in all heat transport processes and increases with the geometrical surface area. The same transport phenomena are also responsible for the loss of unused energy or heat.

In the field of reaction engineering heat supply, e.g. to a reaction site, is often achieved by preheating a medium before entering a chemical reactor or by external heating of the outer walls of a reactor. However, the known methods have limitations in transporting the heat specifically to the reaction site. In typical reactor devices, the heat is transported from the reactor wall into the reactor interior, but also released into the surrounding environment. Additionally, in reactor devices for continuous processes, a packing of a reactor can only store the absorbed heat to a limited extent, since a large part is discharged from the reactor with the outflowing medium. In order to provide the temperatures required at the reaction site, the heat loss must be compensated by increasing the energy input. For both economic and ecological reasons, it is therefore desired to keep this heat loss as low as possible through appropriate measures and to continuously optimize methods for heat input. Further difficulties of conventional reactor heating via the reactor wall result from an uneven heat distribution along a cross-section of the reactor. Portions at the reactor wall can have a significantly higher temperature compared to portions more distant to the reactor wall. In particular in fixed-bed reactors, a heat sink may occur at a center portion of the reactor, i.e. the portion most distant to the reactor wall.

For many industrial processes, such as steam methane reforming (SMR), heating of a reactor device is typically conducted externally by an open flame. Since such an external heating is indirect, i.e. typically the heat is transported via the reactor wall, this approach suffers from a significant inertia and has the above-mentioned difficulties regarding uneven heat distribution. While such inertia may be tolerable for large scale continuous SMR processes, the open flame is typically fed by fossil fuels, produces combustion gases, which often need additional after treatment and/or releases greenhouse gases into the atmosphere. It is therefore desirable to provide a system for supplying heat in an even manner to a reactor without requiring external heating by an open flame.

The obstacles mentioned above can be observed when supplying heat to many different types of reactors, such as reactor devices for exhaust treatment. Such reactor devices are equipped downstream of an exhaust generating device, such as combustion chambers. Combustion chambers can be found in internal combustion engine but also in many other applications, such as power plants. In particular in the automotive field, hybrid vehicles having an electric engine and an internal combustion engine gained popularity. When hybrid vehicles are propelled by an electric engine, the internal combustion engine may be turned off, to safe fuel. Whenever required, the internal combustion engine is started to provide power to the drive system. In such a vehicle, the internal combustion engine operates a substantial time in a cold condition, generating significant amounts of undesired exhaust gases. Since the internal combustion engine does not run permanently, exhaust treatment systems located downstream thereof do not operate under ideal conditions. There are several concepts of supplying additional heat to the exhaust treatment systems, however, they suffer the same disadvantages described above for the field of reaction engineering and in addition are often not fast enough to ensure an almost instantaneous operating temperature after the internal combustion engine is started.

It is therefore an object of the present invention to provide a component for supplying heat in a direct, fast and spatially defined manner, in particular inside a chemical reactor for treating fluids while such a component has a long lifetime and is easy to electrically connect.

This object is solved by an electrically heatable metal foam component (EHC) according to claim 1. Further, this object is solved by a reactor device comprising such an electrically heatable metal foam and by a process for the treatment of a fluid, wherein the fluid flows through such a reactor device.

Specifically, the electrically heatable metal foam component (EHC) of the present invention comprises metal foam material having at least one contacting section, for electrically contacting the metal foam material, at least one transition section and at least one heat transfer section, wherein the transition section is arranged between the contacting section and the heat transfer section, wherein in the contacting section the metal foam material is densified, in particular compressed, in comparison to the heat transfer section, and wherein in the transition section the degree of densification, in particular by compression, changes from the degree of densification in the contacting section towards the metal foam material in the heat transfer section.

By providing a contacting section, a transition section and a fluid treatment section, it is possible to electrically contact the metal foam material to an electric energy source while ensuring an even distribution of electric current throughout the electrically heatable metal foam. It was found that a direct electric connection of an electric energy source to undensified, such as uncompressed, metal foam material leads to an uneven distribution of the electric current, especially in the contacting zone, even if the contact is made across the full thickness of the metal foam, e.g. by a welded-on contact plate or contact lug. The electric current takes the shortest path to the opposite pole contact point and does not use all of the available conductive paths, i.e. struts of the metal foam material. This effect results in a locally higher resistance (conductor cross-section not fully utilized) and correspondingly higher temperatures, which is an additional burden on the mechanical load-bearing capacity of the material. In this context, the change of the degree of densification, in particular by compression, is preferably a gradual change.

Experiments have demonstrated that during current coupling, the connection point of the undensified, e.g. uncompressed, foam is subjected to massive stresses. Failure of the components, i.e. of single metal struts, is most likely to occur here. Gradually more and more of such metal struts become damages, until current coupling into the metal foam material fails. This effect limits the life-time of an EHC which does not have a contacting section. The design of the electrically heatable metal foam of the present invention allows an even current coupling into the metal foam material at the contacting section. The transition section distributes the current then in an even manner into the heat transfer section, especially when the degree of compression in the transition section changes gradually. Thereby, a more uniform current distribution is achieved, in particular at the contacting zone, in consequence this design suppresses the occurrence of locally higher resistance and correspondingly higher temperatures, which otherwise would lead to the rapid failure of metal foam struts. Hence, the present invention provides for a long lifetime of EHCs.

In the EHC of the present invention, in the contacting section the density of the metal foam is increased, e.g. by compressing the cells of the metal foam material, particularly to such an extent that superimposed struts - which were previously (i.e. before compression) arranged separately in space - are in direct contact with one another, thus increasing the effective (utilized) conductor cross-section. The series of contacts in the contacting section and a gradual transition from the contacting section to the heat transfer section via the transition section result in an EHC with uniform electrical conductivity properties and a resulting homogeneous heat generation over a wide area. This leads to a significantly longer service life of the EHC of the present invention. The densification can be achieved by additive processing, such as by filling cells of the foam material with an electrically conductive additive, e.g. in powder form, plasma spray treatment or treatment with a metal slurry.

Further, the higher density of the contacting section also simplifies contacting, e.g. by resistance welding or screws. In the original, i.e. uncompressed state, of the foam, this is reserved for experts only.

According to one particular embodiment of the EHC according to the invention, the number of heat transfer sections provided in the metal foam material of the is preferably half the number of transition sections and contacting sections, wherein each heat transfer section transits via two transition sections provided at separate portions of the heat transfer section into two contacting sections. This allows to couple current into the heat transfer sections and out of the heat transfer section, in order to connect more than one heat transfer sections either in a parallel circuit or in a serial circuit.

In a preferred embodiment, in the EHC according to the present invention a length of the transition section is at least 0.3 times the thickness, in particular at least 0.5 times the thickness, of the metal foam material at the heat transfer section at a position adjacent to the transition section. More preferably a length of the transition section is in the range of 1.0 to 5.0 times the thickness of the metal foam material at the heat transfer section at a position adjacent to the transition section. Since the mechanical stability of the metal foam depends on a interconnected network of cells, compression is in particular carried out in such a way that the network and its connections remain intact. Step-like compression would damage the structure in parts due to the shear forces that occur. By providing a transition section having a length of at least 0.5 times, preferably 1.0 to 5.0 times, the thickness of the metal foam material at the hat transfer section at a position adjacent to the transition section, a gradual, i.e. smooth, transition is provided while maintaining the mechanical stability of the metal foam material, i.e. a breaking of the material between the contacting section and the heat transfer section is less likely to occur with the transition section having a length as indicated above.

In a preferred embodiment of the present invention, more than one heat transfer sections are electrically connected via transition section(s) and contacting section(s). Thereby more complex designs can be realized and the EHC can be adjusted to its use.

In accordance with the present invention it is particularly preferred to compress the metal foam material in the contacting section such that its thickness is reduced by at least 60%, in particular by at least 70%, by at least 75%, by at least 85% of the thickness of uncompressed metal foam material. There is no upper limit for the compression and the metal foam material in the contacting section may be compressed as much as possible. With such a compression, the thermal load at the contact point to the electrode is massively reduced. This leads to a significantly better durability of the entire component. The minimum degree of compression may vary widely, depending on the type of metal foam material, i.e. uncompressed metal foam material. A relatively dense metal foam material, having a porosity of e.g. 60% as defined below, may already achieve the advantageous effects of the present invention by compressions corresponding to a thickness reduction of less than 60%. However, in particular for high porosities, e.g. of greater than or equal to 70%, particularly preferably greater than or equal to 80%, and very particularly preferably greater than or equal to 85%, even more preferably greater than or equal to 95%, and most preferably it may be 97% or greater, the degree of compression is in particular as indicated above. The porosity of the metal foam material as mentioned herein refers to the ratio of volume of metal to volume of void sections and may be determined by image analysis as explained below.

According to the present invention, the thickness of the metal foam element, in particular of the metal foam, may vary over a wide range. It is preferred though that the metal foam material in the heat transfer section has a thickness in the range of 1.0 to 100 mm, in particular from 1.5 to 75 mm, in particular from 1.5 to 50 mm. Preferably, the thickness is such that at least 3 pores, in particular at least 5 pores, further in particular at least 7 pores are present in the direction of the thickness. In case of a sheet like metal foam material, the direction of the thickness is the direction perpendicular to the sheet, in case of a wound metal foam material, the thickness is the thickness in the radial direction thereof. If the thickness of the metal foam material is higher than indicated it is possible that the metal foam material heats unevenly, which may be detrimental to the life time of the EHC.

The EHC is preferably configured in the reactor such that the length of the through flow of gas through the metal foam material is equal to or higher than the thickness of the metal foam element. Most preferably, the length of the through flow of gas is longer than the thickness of the metal foam element. The length of the through flow is equal to the thickness of the metal foam when for example a foam sheet is arranged such that the fluid flowing through the reactor flows in normal direction to the surface of the metal foam material. The length of the through flow is correspondingly increased when the metal foam is arranged such that the fluid does not flow in a normal direction to the surface of the metal foam material.

In a preferred embodiment of the present invention, the porosity of the metal foam material in the heat transfer section is greater than or equal to 70%, particularly preferably greater than or equal to 80%, and very particularly preferably greater than or equal to 85% and most preferably it may be 95% or greater. By using such highly porous metal foam material, the pressure drop across the metal foam material can remain low which may be advantageous for certain applications. The porosity here designates the quotient from the volume of the pores in the metal foam to the total volume of the metal foam. It has been found that a porosity of less than 70% has a negative effect on the mass transfer and on the pressure loss when such a metal foam is used in an electrically heatable metal foam component (EHC). The porosity is here determined by means of an image analysis with reference to a transverse cross-section of the metal foam. A transverse cross-section of the metal foam is prepared for this purpose and an image is taken of it. To determine the porosity, the image surfaces with and without material, i.e. the material regions and the hole regions, are put into relationship with one another. A porosity of 50%, for example, means that the surfaces with and without material are of equal size in the taken image. The higher the proportion of the surface without material in the taken image, the higher the porosity of the metal foam.

The metal foam has several properties that allow for an efficient, fast and specific heat transfer to the fluid by the heatable metal foam. The foamy structure includes irregular pores which causes turbulences in the fluid passing therethrough or along the surface of the metal foam. These turbulences support the heat transport by convection which provides for a much faster heating of the fluid. Further, the metal foam provides a large surface area, further supporting the transfer of heat from the heated substrate, i.e. the metal foam, to the fluid. In addition, it is also possible to supply heat directly inside a reactor by radiation. Heated metal foam can exhibit heat radiation directly within the reactor. Reactor fillings that may be provided in the vicinity of the EHC, such as catalyst pellets or the like, may receive the heat energy via radiation from the metal foam element. Accordingly, heat radiation can be supplied also at the center of the reactor, which is only possible in a very limited manner, if at all, for conventional reactor designs utilizing an externally heated reactor wall. Further, supplying heat directly by electrically heating the metal foam inside the reactor device is significantly faster than for example typical indirect heat supply via a reactor wall. In consequence, the heat transfer can be started in a targeted manner whenever necessary not requiring significant lead times as would be required when supplying the heat indirectly, e.g. via the reactor wall. Since the metal foam is within the reactor device and is arranged so that a fluid inside the reactor device comes into contact with the open pores of the metal foam, it is not necessary to supply the heat indirectly via the reactor wall. Avoiding external flame heating of the reactor wall gives further the possibility to significantly reduce greenhouse gas emissions, provided of course that the metal foam element is heated with electricity from a sustainable source.

Since the metal foam is preferably at least in the heat transfer section an openpore metal foam, it is possible for gaseous and liquid reactants to penetrate through the total metal foam and to be directly supplied with heat. In this context it is noted that according to an embodiment of the present invention it is preferable for the reactor device of the present invention that the metal foam material of the heat transfer section is arranged in a way that fluid contacts the metal foam by flowing through the metal foam, i.e. the fluid passes through the open pores of the metal foam. A preferred way for achieving this is by arranging the metal foam within a flow path of the fluid inside the reactor, so that the fluid essentially cannot bypass the metal foam or the metal foam element.

According to another embodiment, in the EHC according to the invention, the metal foam material in at least the heat transfer section thereof has a tubular shape with a hollow inner portion along its axis. Thereby a flow path can be provided within the tubular shape of the heat transfer section, i.e. the fluid can flow through said hollow inner section without needing to pass through the metal foam material. It may be desired to lead the fluid through the metal foam material. In such a case, the hollow inner portion may be blocked by a fluid impermeable material so that fluid entering the hollow portion has to penetrate the metal foam material in order to exit the heat transfer section. Alternatively, the EHC may be designed and arranged within a reactor device to have to penetrate the metal foam material before reaching the hollow inner section and continuing to flow in a reactor device.

In a further embodiment of the present invention, the metal foam material in at least the heat transfer section thereof has a helical shape, wherein preferably electrically insulating section of insulating material or a gap is arranged between neighboring strips of the helical shape. The electrically insulating material or part(s) define an electric path through the metal foam material. The helical shape of the metal foam material increases its lengths and reduces the geometrical and electrical cross section, so that the current has to travel a longer distance through the metal foam material before leaving the metal foam material and a more even heating of the metal foam is achieved. Thereby the heat transfer is more even compared to a tubular or rod-like design. Further, by providing an insulating material between neighboring strip sections of the helically shaped metal foam material, a shortening of the circuit between the strip section is avoided, though this can be achieved in principle also by providing a sufficient gap between neighboring strip sections. Further, the helically shaped metal foam material may be mechanically stabilized by the insulating material. In addition, when filling the portions between neighboring sections of the helical strip of metal foam material, also an overall tubular shape can be generated, having the advantages described above while at the same time having the increased electrical path length, improving heat transfer power. The insulating section has a specific electric resistance which is higher than the resistance of the metal foam material itself. The insulating section preferably has a specific electrical resistance of 10⁷ Ω·cm or higher, more preferably of 10⁸ Ω·cm or higher, even more preferably of 10⁹ Ω·cm or higher. As mentioned above, the insulating section may be a gap. In such a case, the specific electrical resistance is determined by the matter within the gap, i.e. the fluid streaming therethrough.

The EHC of this embodiment of the present invention may comprise more than one helically shaped metal foam material sections, in particular two or more helically shaped metal foam material sections. Thereby the evenness of the temperature is even further increased. It is particularly preferred that the two or more helically shaped heat transfer sections form a double helix or triple helix or quadruple helix and so on, depending on the number of helically formed metal foam heat transfer sections, i.e. the strips of the helixes are arranged parallel to one another and the helixes turn around a common longitudinal axis. The strips of the double helix (and higher helixes) may be separated from one another by arranging an electrically insulating material, such as ceramics, glass, polymeric materials and the like between the strips or by providing a void gap there between. As described above for the single helix, this way a short circuit between these strips can be reliably avoided and the mechanical strength is improved.

Alternatively or additionally, among the at least two heat transfer sections having a helical shape two helically shaped sections are essentially wound around the same longitudinal axis, wherein one heat transfer section has a smaller radius and is located within a cavity of a heat transfer section having a larger radius, i.e. one helically wound heat transfer section is located within another helically wound heat transfer section.

Single or multiple helical strips lead to a defined current flow, since the current is offered a geometrically limited cross-section. This is preferable for large cross sections, since experiments have shown that the current always takes the shortest path through a metal foam material and can heat large partial areas poorly or not at all. The smaller the cross section - also in terms of current density - the more evenly the current flows in the cross section. Therefore, the more strips, the more uniform the heat coupling into the media in the reactor. The helix is connected to a current-carrying conductor via electrodes. These are located at the ends of the helix. If multiple helices are used, the current can be collected at the ends on one side via a common electrode. This corresponds to a parallel connection of the individual strips of the helix. If the cross section of the flowed through body should be too high, it is also possible to build up a series connection and connect the end of one strip of the helix with the adjacent strip end.

Preferably, each of at least two heat transfer sections having a helical shape are electrically connected to one another via contacting zones provided at each of the helically shaped heat transfer sections. Thereby a long electrical path can be generated, improving the evenness of the heat transfer and of the EHC of the present invention. It is possible to connect the helically shaped heat transfer sections in a parallel circuit or in a serial circuit. It was found that connecting the helically shaped heat transfer sections in a serial circuit is favorable for EHCs having a length of the heat transfer section of less than 10 times, in particular less than 5 times, the diameter thereof. In the following, the serial circuit is explained in a situation where the EHC is arranged within a reactor device through which a fluid streams, so that the EHC has an upstream end and a downstream end. In the serial circuit, the current is coupled into an upstream end of a first helical heat transfer section. At the downstream end of the first helical heat transfer section, an electrical connection is provided towards a downstream end of a second helical heat transfer section so that the electric current can flow from the downstream end to the upstream end of the second heat transfer section. In consequence the current flows in a meandering pattern through the EHC. In contrast, in a parallel circuit, all upstream ends of the helically wound heat transfer sections are coupled with a current source. The electrical current flows through each helix from the upstream end to the downstream end. It was found that a parallel coupling is suitable for EHCs having a length of the heat transfer section of greater than 10 times their diameter.

According to another embodiment of the present invention, the EHC comprises at least one, in particular at least two heat transfer sections having a plate shape. Such a plate shaped heat transfer section may be arranged within a fluid stream so that the fluid flows over the surface of the metal foam material. Thereby a particularly small pressure drop can be realized. Further, the large surface area of a metal foam plate allows for an efficient heat transfer. In particular, the EHC of this embodiment has at least two heat transfer sections having a plate shape, wherein the plate shaped heat transfer sections are arranged with a gap in-between the individual plates. The plates may be hold in position by a frame. When arranged within a reactor device, the frame may be suitably connected to the plates and the reactor wall to couple electrical current into the metal foam material of the plates. Also here a parallel or a serial coupling of the metal foam plate is possible.

In another embodiment of the present invention, the EHC comprises one or more fluid impermeable part(s). Said fluid impermeable parts are in particular designed to direct a fluid flowing through the metal foam material of the heat transfer section. As described above for the tubular design, such fluid impermeable part(s) can direct the fluid in a desired manner e.g. through the metal foam material. Alternatively, the fluid impermeable part(s) may cover an upstream face of a metal foam plate, so that at least a part of the fluid flows over the plate surface without penetrating the metal foam material. The fluid impermeable parts may be electrically isolating parts as mentioned above. Herein the terms electrically insulating and electrically isolating are used interchangeably.

In yet another preferred embodiment, the electrically heatable metal foam component further comprises electrically conductive strips connected to the contacting section. Thereby an electric current can be evenly coupled into the contacting section and evenly distributed via the transition section across the complete cross-section of the metal foam material in the heat transfer section.

According to another embodiment of the present invention, it is preferable that the metal foam material of the heat transfer section is arranged in a way that fluid contacts the metal foam by flowing over the surface of the metal foam. This can be achieved preferably by arranging the metal foam element within the flow path of the fluid, without blocking the entire flow path. Thereby, gaps are formed between the metal foam material and flow-path defining wall(s) of the reactor device. Due to these gaps, at least a part of the fluid can flow around the metal foam element and experiences less pressure drop. The foamy structure of the metal foam provides a rough and irregular surface, which causes turbulences in a fluid flowing over the metal foam's surface. Thereby heat transport by convection is significantly increased, in particular when compared to fluid flowing along a smooth or corrugated reactor wall or along the surface of sheet like reactor fillings. In accordance with this embodiment, it is one possibility to provide the metal foam on the inside of a reactor wall, i.e. the wall of the reactor device of the present invention defining a flow path for the fluid, wherein the metal foam forms an inner cladding of the wall of the reactor device.

According to yet another embodiment of the present invention, it is preferable that the fluid contacts the metal foam by flowing through the metal foam and over the surface of the metal foam. This can be considered as a combination of the first and second embodiment of the present invention described in the previous paragraphs. Accordingly, in this embodiment of the present invention, gaps are formed between the metal foam element and flow-path defining walls of the reactor device. However, these gaps are either narrow, so that pressure drop for fluid flowing through the gaps is similar to pressure drop for fluids flowing through the metal foam. Alternatively, the gaps are only formed in a portion of the flow-path of the fluid, as defined by flow-path defining wall(s) of the reactor device.

Metallic catalyst support bodies show increased mechanical stability and higher thermal conductivities compared to widely used ceramic supports. Thus, catalysts based on metal supports generally display a faster initial activity. Metallic honeycomb bodies and monoliths known from the state of the art are frequently made from metal sheets or metal foils. US7189271 B2 describes a catalytic reactor comprising a plurality of metal sheets arranged as a stack defining gas flow channels. The metal sheets are shaped in such way to provide increased heat-transfer areas. The temperature of the reactor may be raised to a desired operating temperature by direct electrical heating, passing electric current through the sheets that form the reactor. Nevertheless, the geometrical surface area of metal sheets and foils is considerably smaller than the surface area of a three-dimensional porous metallic foam substrate. The considerably larger geometrical surface of a metallic foam in combination with the irregular shape of its pores improves heat transfer by conduction and radiation between the reactants and the metallic substrate constituting a substantial advantage compared to the state of the art. Further, also heat transfer by convection can be increased due to the irregular foamy structure of the metal foam element used in the present invention causing turbulences in a fluid flowing over and/or through the metal foam. In view of this, the metal foam has preferably a ratio of surface area (in mm²) to volume (in mm³) of at least 2.0 mm²/mm³. More preferably the ratio is at least 3.0 mm²/mm³, even more preferably at least 5 mm²/mm³, even further more preferably at least 8 mm²/mm³. he ratio of surface area to volume can be determined by performing X-ray phase contrast microtomography on metallic foams. The upper limit of the surface to volume ratio is not particularly limited and can be as large as 50 mm²/mm³ or as large as 30 mm²/mm³ or as large as 15 mm²/mm³.

Two adjacent scans with were collected and subsequently merged into one single volume of each sample. The X-ray beam energy in this setup was 102.5 KeV with a voxel size of 0.65 µm × 0.65 µm. The Delta/Beta Value of 2.5 was used for the phase retrieval.

The term metallic foam may be used interchangeably with the term metal foam. Both terms, as used herein, refer to a preferably open-porous foam material of any metal or any alloy of metals, which can optionally contain further additives such as, for example, carbides. Metal foams are characterized in having a large number of pores, which are connected to one another, making the material permeable for gaseous and liquid fluids. Metal foams can be manufactured by several methods well known to the skilled person. Foams consisting of pure metal, such as for example of nickel, iron, copper, silver and some alloys can be produced by electrodeposition of the corresponding metals on organic foam structures. Metal alloy foams can also be produced by a powder-metallurgical process. A pure metal foam is coated with an alloy powder consisting of the desired portions of metals. A homogenous alloy is then produced by a sintering close to the melting point, wherein the structure of the previously used metal foam is preserved. This process is described for example in the German patent application DE 10 2004 014076. The present invention is, however, not limited to specific processes for manufacturing metal foam.

The heat distribution within the reactor device of the present invention may be controlled by several factors. By controlling the design of the metal foam element, the distribution of one or more of these metal foam elements throughout the reactor device and by targeted control of the electrical heating of the metal foam, it is possible to specifically create hotter/colder zones within a reactor, separated zone heating elements, temperature gradients or especially homogeneously heated reactors. The amount of heat created depends on the size and number of metal foam elements introduced into the reactor, their spatial arrangement, the geometric shape of the metal foam and further material parameters of the chosen metallic foam. Metal foams are available with different metal compositions, densities/porosities, pore sizes, strut thicknesses. Metal foams can be easily processed by stamping, compressing and combining them with metal foils. However, there are multiple other possibilities of processing metal foam, such as laser cutting, waterjet cutting, spark erosion, machining, in particular sawing, drilling, turning, or grinding, controlled crushing, twisting, rolling, pressing, folding, heat treatment, welding, in particular welding with an arc, separation welding, or treatment with a soldering lamp.

According to one aspect of the present invention it is preferable for the metal element to comprise one or more electrically isolating portion(s), in addition to the metal foam. The isolating portions can be made of isolating material, which can be any of ceramics, polymers, composites as for example conductive materials with isolating surfaces, but can also be provided in the form of grooves or other interruptions in the metal foam, so that the metal foam is not continuous. In case of a discontinuous metal foam, the electrically isolating portion(s) may be filled with the fluid running through the reactor during operation. The isolating material includes any material having a maximum electric conductivity of 10⁻⁷ S/cm, a specific resistance of at least 10⁷ Ωcm and/or a dielectric strength of at least 10 kV/mm. The isolating material includes material, which is mechanically or physically deformable. Further suitable examples for insulation materials are glassy or ceramic wools, fibers, soft-pastes, mats or insulating coated metallic sheets/foils, ceramic fiber mats, aluminum silicate wool, Al₂O₃ coated steel sheets and soft paste porcelain foil.

In accordance with the present invention, it is preferable that the EHC further comprises isolating sections, formed from isolating material(s) as mentioned above. Such isolating sections may be realized as isolating parts of isolating material, e.g. in the form of ceramics, polymers, composites as for example conductive materials with isolating surfaces, also areas of any gas, for example air. The isolation material includes any material having a maximum electric conductivity of 10⁻⁷ S/cm, a specific resistance of at least 10⁷ Ωcm and/or a dielectric strength of at least 10 kV/mm. The isolating material preferably includes material, which is mechanically or physically deformable. Further examples for isolating materials are glassy or ceramic wools, fibers, soft-pastes, mats or insulating coated metallic sheets/foils, ceramic fiber mats, aluminum silicate wool, Al₂O₃ coated steel sheets and soft paste porcelain foil. Preferably, the isolating section is impermeable for the fluid in the reactor device. With fluid impermeable insulation sections, the fluid within the reactor device passes through the open pores of the metal foam, while and a bypass through insulating sections is avoided. Thereby, better heat transfer to the fluid within the reactor can be achieved.

According to a preferred aspect of the present invention, the reactor device defines a flow path delimited by walls of the reactor device. The flow path guides the fluid through the reactor device. The metal foam element is provided in the flow path, so that fluid flowing through the reactor device also comes into contact with the metal foam of the metal foam element. In accordance with the present invention it is preferable for the metal foam element to fill an entire cross-section in at least one position of the flow path of the reactor device. Thereby, the fluid flowing through the reactor device is forced to pass through the metal foam of the metal foam element, ensuring superior heat exchange due to the high surface area of the metal foam.

Preferably, the metal foam element has a portion abutting a wall of the reactor device defining the flow path. By abutting, a certain sealing effect is achieved, avoiding bypass of fluid flowing through the reactor, in particular through a path of the reactor as described above. The abutting portion may be made of metal foam. However, in view of processability and fitting, it may also be formed of a non-porous sealing member.

A metal foam element as used in the present invention has a downstream end and an upstream end. Preferably the metal foam element of the reactor device of the present invention has a length of 0.5 mm or more, more preferably of 5 mm or more, even more preferably of 10 mm or more, even further more preferably of 100 mm or more. The upper limit of the metal foam element's length is not particularly limited, it may be the entire length of the reactor device. The metal foam element preferably has a length of 5000 mm or less, more preferably of 4000 mm or less, even more preferably of 3000 mm or less and even further more preferably of 2500 mm or less. The length of the metal foam element as indicated above is the length from the downstream end to the upstream end thereof, measured along the flow path of the reactor device.

In accordance with the present invention, it is preferable to provide at least a first and a second metal foam element within the reactor device. These at least first and second metal foam elements may be arranged in direct contact to each other or may be arranged at a distant from each other, i.e. with a gap between these metal foam elements. The arrangement of the at least first and second metal foam elements may be such, that a gap between these metal foam elements spanning from an upstream end of the first metal foam element to a downstream end of a second metal foam element is formed. In this regard, it is preferred to arrange two or more, more preferred three or more, even more preferred 5 or more, even further more preferred 10 or more, most preferred 20 or more metal foam elements within the reactor device, such that a gap is formed between two metal foam elements arranged adjacent to one another in the direction of the flow path. A gap between the at least two metal foam elements can be filled with catalyst material, such as catalyst pellets or catalyst coated foam, e.g. in pellet form. Alternatively or additionally, the reactor device of the present invention further comprises an inlet between the upstream end of the first metal foam element and the downstream end of a second metal foam element. i.e. within said gap. Said inlet may be a reactant inlet, for feeding a reactant into the reactor device at a position between two metal foam elements or a sensor inlet, for inserting a sensor into the reactor device at a position between two metal foam elements or a sensor inlet. It is further possible to provide a plurality of inlets, either at subsequent gaps between subsequent metal foam elements or within a single gap. Thereby it is possible to supply more than one reactant into the reactor device at a gap between adjacent metal foam elements or to obtain more than one sensor input or to obtain a sensor input in a gap, where a reactant is fed into the reactor device.

Further, in accordance with the present invention, it is preferable to arrange two or more of the metal foam elements after one another in the flow direction with a gap being formed between down-stream end(s) of a first metal foam elements and an up-stream end of a subsequent of said metal foam elements. This may preferably be achieved by arranging the metal foam elements as a stack, with a gap between adjacent metal foam elements, so that a fluid can flow through that gap when flowing from a downstream end to an upstream end of the reactor device of the present invention.

In accordance with the present invention, the metal foam element preferably comprises one or more electrically isolating part(s) in addition to the metal foam. The isolating parts are preferably arranged within the metal foam to define an electric path through the metal foam element. For achieving this, the isolating part(s) preferably define a path therebetween which is filled with the open pore metal foam.

The shape of the electric path defined by the isolating part(s) is not particularly limited and may be zigzag shaped, spiral shaped, meander shaped or the like for providing a particularly long electric path throughout the metal foam element. Further preferably, the metal foam element comprises one or more fluid impermeable part(s) in addition to the metal foam. These impermeable parts can be made of electrically insulating materials, such as those mentioned above.

The fluid impermeable part(s) are preferably arranged within the metal foam to define a flow path through the metal foam element. For achieving this, the fluid impermeable part(s) may define a path therebetween which is filled with the open pore metal foam. The shape of the flow path defined by the fluid impermeable part(s) is not particularly limited and may be zigzag shaped, spiral shaped, meander shaped or the like for providing a particularly long flow path throughout the metal foam element. In accordance with the present invention, the electrically insulating part(s) can be fluid impermeable parts.

Preferably, the metal foam element further comprises (in addition to the metal foam and) optional electrically isolating parts, optional fluid impermeable parts, electrically conductive strips and/or wires. Depending on the actual use of the reactor device of the present invention, these additional electrically conductive strips and/or wires can be used to conduct the electric current to a desired portion of the metal foam element so that the heat is supplied specifically at such a portion, where the electrically conductive strips and/or wires lead the electric current. For some applications, it may be desirable to provide a higher heat at a downstream section of the metal foam element, whereas for other applications it is desirable to provide a maximum of heat at the upstream section of the metal foam element. Further applications may require a particularly uniform distribution of heat throughout the metal foam. By using electrically conductive strips and/or wires, this can be appropriately adjusted to the desired application, if necessary.

In accordance with the present invention it is preferable when in the reactor device the metal foam is electrically connected to at least two electrodes so that the metal foam is heatable, when conducting an electric current through it, by an electrical resistance. One of these electrodes may be a wall of the reactor device, e.g. a flow path defining wall.

According to another preferred embodiment of the present invention, the reactor device comprises an induction heater, for induction heating the metal foam. This is an alternative to coupling an electric current via a cable into the metal foam material and has the advantage that no wiring to the metal foam material itself is required. In such a case, an induction coil can be placed inside the reactor itself or attached to the outer wall of a reactor according to the invention. In the second case, the reactor device may comprise a wall material with low electric conductivity as for ex. ceramics, glas ceramics, glas, metallic glass allowing magnetic permeability to the reactor filling. The reactor filling may be formed by a bulk of shaped metallic or alloy foam bodies, as for example stacked plates, a single monolith, a series of monoliths or any other shape described for metallic foam within this description.

According to a further preferred embodiment, the reactor device further comprises an electromagnetic wave generator for dielectric heating the metal foam. Particularly preferably, the electromagnetic waves are microwaves.

Preferably, the reactor device of the present invention is designed for a continuous flow of at least one fluid.

According to a preferred aspect of the present invention, the metal foam is contained within a reaction chamber of the reactor device. The reaction chamber is preferably a flow reactor, in particular a continuous flow reactor.

Preferably, in the reaction device of the present invention, a catalyst is arranged in the proximity of the metal foam element. Thereby, a desired amount of heat can be applied to the catalyst by radiation. In conventional reactor devices, the catalyst is heated via the reactor wall. Heat transfer by radiation, however, requires that the electromagnetic wave can reach a place to be heated. Thus, the heat transfer by radiation via the reactor wall is very limited.

Further preferably, the catalyst is arranged downstream of the metal foam element. By this arrangement, the catalyst may be heated by radiation, as mentioned above, while also the fluid can be supplied with heat from the metal foam element before contacting the catalyst. To support heating of the catalyst arranged downstream of the metal foam element, the catalyst is preferably arranged in proximity of the metal foam element.

The catalyst arranged downstream of the metal foam element can be the only catalyst in the reactor device, however, depending on the application, it is also possible that an additional catalyst is provided in the reactor element, e.g. in the form of the metal foam or in the form of catalytic particles within the metal foam, i.e. arranged inside the pores of the metal foam, preferably arranged on the struts of the metal foam. Accordingly, the catalyst can be introduced into the pores in the form of a washcoat, by precipitation, chemical deposition, incipient wetness, physical vapor deposition, chemical vapor deposition and the like.

In order to achieve a preheating of fluids before chemically reacting the same, it is preferable for some applications to arrange the EHC upstream of a reaction chamber of the reactor device in accordance with the present invention. For other applications, where it is for example required to supply heat at the reaction site, it is preferable that the metal foam element is arranged in the reaction chamber and either the metal foam of the EHC has catalytic activity or is a support for catalytic particles having a catalytic activity for catalyzing a chemical reaction at the reaction site.

In accordance with a preferred embodiment, the metal foam comprises a catalytically active material that can catalyze heterogeneous reactions and is in particular suitable for converting gaseous and/or liquid reactants. The catalytic material can be present in form of catalytic particles deposited on the metal foam, i.e. on the external and internal surfaces of the metal foam. Alternatively, or additionally, the catalytic material can be part of the metal foam material itself, i.e. the metal foam material is catalytically active.

The metal foam preferably comprises at least one of the elements Ni, Fe, Cr, Al, Nb, Ta, Ti, Mo, Co, B, Zr, Mn, Si, La, W, Cu, Ag, Au, Pd, Pt, Zn, Sn, Bi, Ce, Mg, Ru, Rh, Ir and/or Os. The metal foam particularly preferably comprises at least one of the elements Ni, Fe, Cr and/or Al and very particularly preferably at least one of the elements Ni and/or Al. A plurality of these elements can together form a component of the metal foam as an alloy or can be present as particles on the metal foam. In addition, these elements can be included in particles that are present within the metal foam. The metal foam particularly preferably comprises a nickel-iron-chromium-aluminum alloy and/or a nickel-chromium-aluminum alloy. The nickel-iron-chromium aluminum alloy and/or the nickel chromium aluminum alloy can be doped with further elements to set and optimize the catalytic activity. Examples for such further elements are elements selected from the group consisting of Ni, Fe, Cr, Al, Nb, Ta, Ti, Mo, Co, B, Zr, Mn, Si, La, W, Cu, Ag, Au, Pd, Pt, Zn, Sn, Bi, Ce, Mg, Ru, Rh, Ir and Os.

Very particularly preferably the metal foam at least substantially comprises a nickel-iron-chromium-aluminum alloy and/or a nickel-chromium-aluminum alloy. This means that, except for a possibly doped nickel-iron-chromium-aluminum alloy and/or a nickel-chromium-aluminum alloy, the metal foam only includes unavoidable contaminants and/or residues of a soldering film possibly used in the production.

The metal foam preferably has pores having diameters that are distributed in a monomodal or multimodal manner, in particular in a bimodal manner. In accordance with a particularly preferred embodiment, the pores are distributed in a multimodal manner and are spatially arranged within the metal foam such that pores are present in a first region of the metal foam having larger diameters than in a second region of the metal foam spatially separate therefrom. Pores having different diameters can be used to influence the dwell time of reactants and products within the metal foam. The formation of turbulence can also be influenced by pores that differ with respect to their sizes, types, or geometries, whereby the heat transfer and mass transfer can be influenced.

The metal foam material preferably has pores that have diameters of 10 µm to 10,000 µm, preferably of 50 µm to 5000 µm, very particularly preferably of 300 µm to 3000 µm, most preferable of 1500 - 3000 µm. Pores having diameters of less than 10 µm result in a deterioration of the mass transfer properties. Better heat transfer properties and mass transfer properties can be achieved using metal foam material that has a pore diameter of 10 µm or more. However, with pores having a diameter of more than 10,000 µm the efficiency of a reactor having such metal foam as the catalyst charge and/or carrier is reduced due to a reduced ratio of a catalytically active surface provided by the metal foam to the inner volume of the pores. Further, pores of 10,000 µm or larger may cause only little turbulences in a fluid flowing through the metal foam, so that the convective heat transfer is reduced compared to metal foam having pore diameters within the indicated ranges.

The porosity of the metal foam is preferably greater than or equal to 70%, particularly preferably greater than or equal to 80%, and very particularly preferably greater than or equal to 85% and most preferably it may be 95% or greater. The metal foam is consequently a metal foam of highly porous material.

The metal foam preferably has a strut thickness of 10 to 2000 µm, more preferably of 20 to [1000 µm and even more preferably of 25 to 200 µm. In case the strut thickness is less than indicated, mechanical strength of the metal foam is poor and the metal foam may have a high electrical resistance. Applying an electric current may then result in hot spots at the thinnest struts, which may cause the formation of neckings and eventually can cause degradation of the metal foam. In case the strut thickness is higher than indicated, the resistance of the metal foam is low and heating by applying an electrical current may require very high currents.

There are different possibilities for heating the metal foam of the metal foam element. It may be preferred in the reactor device of the present invention when the metal foam is electrically connected to at least two electrodes so that the metal foam is heatable when conducting an electric current through it by an electrical resistance. In other words, the metal foam is preferably the heating element of an electrical resistance heater.

According to an alternative, it is preferred for the reactor device of the present invention to comprise an induction heater, for induction heating the metal foam. Thereby, electrical energy can be supplied to the metal foam without the need of additional electrical contacts and/or wires connecting to the metal foam.

In a further preferred embodiment, it is preferred when the reactor device further comprises an electromagnetic wave generator for dielectric heating the metal foam. More preferably, the electromagnetic waves are microwaves.

Preferably, the reactor device according to the present invention is designed for a continuous flow of at least one fluid. Even more preferably, the metal foam is contained within a reaction chamber of the reactor device.

It may also be preferable when the metal foam is arranged upstream of a reaction chamber of the reactor device.

Further preferably, catalyst particles are arranged within the open pores of the metal foam. Heat supplied by the electrically heatable metal foam may then be directly utilized by conducting the chemical reaction at the site of heat supply. Thereby, heat losses when the fluid flows through downstream parts of the reactor element may be avoided.

For some applications it is preferable to arrange an additional catalyst downstream of the metal foam. Thereby, the fluids are heated by the metal foam and subsequently reacted in the additional catalyst arranged downstream. This may be a particularly useful arrangement, when the catalyst is for example not compatible with the material or structure of the metal foam.

The reactor device of the present invention has a defined flow path for a fluid, delimited by walls of the reactor device, wherein said flow path guides at least one fluid through the reactor device, and wherein an electrically heatable metal foam component (EHC) according to the present invention, i.e. as described by in general above, by the embodiments mentioned herein and the appendant claims.

According to an embodiment, the reactor device according to the present invention the EHC is arranged in the flow path so that it has a downstream end and an upstream end, wherein the flow path from the upstream end to the downstream end of the electrically heatable metal foam component passes through the metal foam material.

In another embodiment, wherein the metal foam of the EHC is designed and arranged such that the at least one fluid passes from a radial outer side of the metal foam material to a radial inner side of the metal foam material, or wherein the metal foam component is designed and arranged such that the at least one fluid passes from a radial inner side of the metal foam material to a radial outer side of the metal foam material.

In yet another preferred embodiment of the reactor device according to the present invention, the walls of the reactor device define a tubular flow path and in the electrically heatable metal foam component, the metal foam material in at least the heat transfer section thereof has a tubular shape being arranged essentially concentrically with the tubular flow path defined by the reactor walls.

According to a further exemplary embodiment of the reactor device according to the present invention, the walls of the reactor device define a tubular flow path and in the electrically heatable metal foam component, the metal foam material in at least the heat transfer section thereof has a helical shape being arranged essentially concentrically with the tubular flow path defined by the reactor walls. Preferably, more than two, in particular more than three, in particular more than 4, in particular more than 6 helically wound heat transfer sections of metal foam material are provided, wherein the individual heat transfer sections are concentrically arranged and the helical strips thereof run parallel to form a double helix or higher helix, depending on the number of helical strips, i.e. heat transfer sections.

In accordance with another embodiment, the reactor device or the present invention is provided with an EHC comprising at least one heat transfer section having a plate shape, wherein the at least one plate shaped heat transfer section is arranged essentially parallel to the flow direction of the flow path.

The EHC can be designed so that a fluid passes through or along the metal foam material in a radial or axial direction of the reactor. In case of a design such that the fluid passes through or flows along the metal foam in axial direction, the length of the EHC is preferably in the range of 1.0 mm to 500 mm, preferably 10 mm to 400 mm, more preferably of 20 to 300 mm. In case of a design such that the fluid passes through or flows along the metal foam in radial direction, the length of the EHC is preferably in the range of 5.0 mm to 5000 mm, more preferably in the range of 30 mm to 2000 mm, even more preferably in the range 50 mm to 1000 mm. The length of the EHC is the length from a downstream end to an upstream end thereof, when measured directly from a downstream end to an upstream end, i.e. not along an for example helically wound path of a heat transfer section.

According to an embodiment, in the reactor device according to the present invention, the metal foam is electrically connected to at least two electrodes so that the metal foam is heatable when conducting an electric current through it by an electrical resistance.

According to an alternative embodiment, the reactor device comprises an induction heater, for induction heating the metal foam.

According to yet another embodiment, the reactor device further comprises an electromagnetic wave generator for dielectric heating the metal foam. For example, the electromagnetic waves are microwaves.

Preferably, the reactor device is designed for a continuous flow of at least one fluid.

In accordance with a preferred embodiment of the present invention, the metal foam of the heat transfer section of the EHC is contained within a reaction chamber of the reactor device.

In accordance with another preferred embodiment of the present invention, the metal foam of the heat transfer section of the EHC is arranged upstream of a reaction chamber of the reactor device.

According to another embodiment, in the reactor device according to the present invention, a catalyst is arranged downstream of the metal foam.

The reactor device according to the present invention can be used for different processes. According to one exemplary embodiment, the reactor device is for treating exhaust gas of an internal combustion engine, or for treating exhaust gas of an industrial process, or for supplying heat to an industrial process.

The present invention further concerns the use of a reactor device according to the invention, for any method of conducting chemical reactions (gas phase and liquid phase), industrial emission control and automotive emission control. In a particular embodiment, the present invention concerns the use of a reaction device of the present invention for fixed bed reactions, for example such reactions with high energy demand conducted at elevated temperatures. The reactor device of the present invention may be used for conducting endothermic as well as exothermic processes.

In the following specific applications are described for which the reactor device according to the present invention can be preferably used. Steam reforming is a process for the production of mainly hydrogen and synthesis gas (hydrogen and carbon monoxide) formed by the reaction of hydrocarbons (methane, ethane, propane or other hydrocarbons in natural gas) and water. The SMR (steam methane reforming) process is endothermic consuming 206 kJ/mol of heat with an efficiency of around 70 %. On an industrial scale, the reaction is usually conducted in multiple reactor tubes with a height of up to 15 meters. The tubes are externally heated in an open flame burner top fired furnace at 750 - 800 °C, making SMR an energy- and capitalintensive process. The integration of an electrically heated metal foam element according to the present invention enhances the overall energy balance of the process by improving heat supply heat utilization and uniformity of heat distribution. In view of this the reactor device of the present invention is preferably at least a part of a steam methane reforming reactor. As set out above, the electrically heated metal foam provides the possibility to directly supply heat at the desired reaction site, so that an indirect heating via the reactor wall is not necessary. The present invention also allows to avoid the external heating by an open flame, as for conventional SMR process. Therefore, the SMR process can be carried out without releasing combustion gases from the external burner. This is in particularly useful for generating hydrogen from methane, e.g. from natural gas, whereby it is desired to release as little greenhouse gases as possible. Hydrogen obtained by this process is often referred to as grey hydrogen when the carbon dioxide produced by the SMR process is released into the atmosphere or as blue hydrogen, when carbon capture technology is applied for capturing and storing said carbon dioxide. In view of this, it is preferable to use the reactor device of the present invention to produce grey or blue hydrogen, more preferably to produce blue hydrogen, by a SMR process.

Further aspects of the present invention concern the catalytic treatment of industrial and automotive exhaust gases comprising pollutants, such as for example NOx, CO or hydrocarbons. Exhaust gas treatment is of continued interest as more and more stringent national and regional legislation increasingly lowers the amount of pollutants that are allowed to be emitted. The conversion of pollutants typically requires elevated temperatures for catalysts being able to sufficiently lower pollutant concentrations in exhaust gases.

Further, the present invention concerns a method of manufacturing an EHC as described herein. The method includes a step of providing a metal foam element and a step of compressing a section of said metal foam element, to obtain a contacting section and a transition section. The compression may be achieved by different possible ways, such as rolling, calandering, stamping, in particular hot stamping, hydroforming, clinching, embossing, molding, and deep drawing. Hot stamping refers to a stamping technique in which the metal foam materal and/or the stamping tool is heated to a temperature above room temperature, in particular to a temperature value in °C of at least 50% of the melting point of the metal foam material. For Example, when a melting temperature of the metal foam is 750 °C, 50% of this value corresponds to a temperature of 375 °C.

The compression is conducted preferably in a manner that the metal struts of the metal foam material are not disrupted in the transition section.

The method of manufacturing an EHC comprises further the attachement of a contact plate or a contact lug to the contacting section in particular by welding or soldering.

In the following the present invention will be further described by referring to drawings and examples. These drawings and examples are not limiting to the present invention. In the drawings, the following is shown:
- FIG. 1: Schematic drawing showing one embodiment for preparing an EHC in accordance with the present invention.
- FIG. 2: Schematic drawing showing one embodiment for preparing an EHC in accordance with the present invention.
- FIG. 3: Schematic drawing of one embodiment of an electrically heatable metal foam component in accordance with the present invention.
- FIG. 4: cross sectional view of the embodiment of FIG. 3.
- FIG. 5A: Another embodiment of an EHC of the present invention, viewed from an upstream end inside a reactor.
- FIG. 5B: EHC of FIG. 5A viewed from a downstream end inside a reactor.
- FIG. 6A: Another embodiment of an EHC of the present invention, viewed from an upstream end inside a reactor.
- FIG. 6B: EHC of FIG. 6A viewed from a downstream end inside a reactor.
- FIG. 7: Another embodiment of an EHC of the present invention, inside a reactor.
- FIG. 8: Graph showing the electrical resistance of a metal foam material depending on the degree of compression in the contacting section.

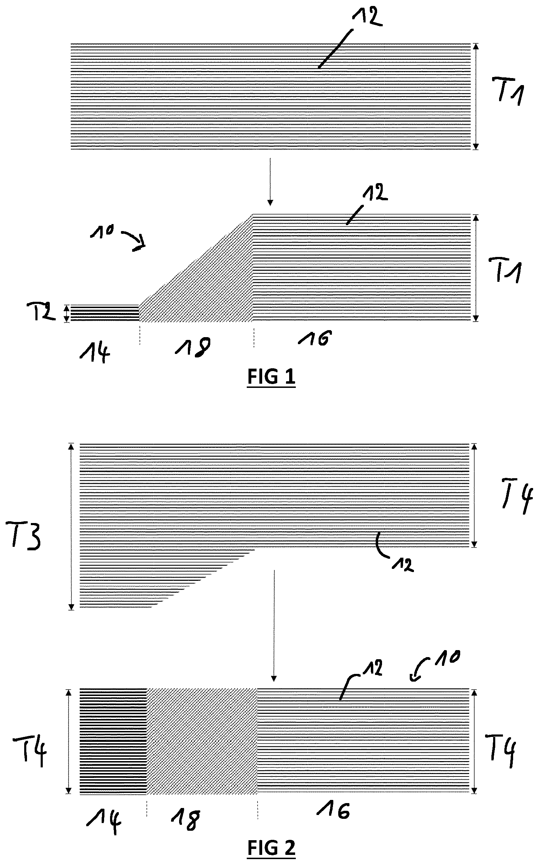

In FIG. 1 a process for producing an electrically heatable metal foam component (EHC) 10 in accordance with the present invention is schematically shown. First, a metal foam material 12 is provided which as a substantially uniform thickness T1. Next, the metal foam material 12 is compressed at one section, to a thickness T2, to form a contacting section 14, while another section of the metal foam material 12 is not compressed. The uncompressed section of the metal foam material 12 is the heat transfer section 16. Between the heat transfer section 16 and the contacting section 14 the degree of compression gradually changes, e.g. in the embodiment shown in FIG. 1 the thickness decreases, from the uncompressed thickness T1 at the heat transfer section 16 towards the compressed thickness T2 at the contacting section 14. The section, where the degree of compression gradually changes is the transition section 18. The drawing of FIG. 1 is entirely schematic and does not show the thicknesses and width of the contacting section 14, the heat transfer section 16 or the transition section 18 according to scale. Nevertheless, as indicated above, it is preferable that the transition section 16 has a length, i.e. the distance between the uncompressed metal foam in the heat transfer section 16 and the contacting section 14, of at least 0.5 times, preferably 1.0 to 5.0 times, the thickness of the metal foam material 12 at the hat transfer section 16 at a position adjacent to the transition section 18, a gradual, i.e. smooth, transition is provided while maintaining the mechanical stability of the metal foam material 12, i.e. a breaking of individual struts of the metal foam material 12 between the contacting section 14 and the heat transfer section 16 is less likely to occur with the transition section 18 having a length as indicated above.

An alternative embodiment for producing the electrically heatable metal foam component 10 is schematically shown in FIG. 2. Also FIG. 2 is not scaled. First, a metal foam material is provided. This initially provided metal foam material does not have a uniform thickness. Instead the thickness T3 at one portion is larger than the thickness T4 at another portion. The thickness decreases gradually from thickness T3 to thickness T4. Next, the metal foam material is compressed, so that it has a uniform thickness T4 also at the portion where it had initially the thickness T3. Accordingly, the section having the initial thickness T3 is compressed, whereas the section of initial thickness T4 remains uncompressed. The compressed section which had the initial thickness T3 forms the contacting section 14, whereas the uncompressed section having initial thickness T4 forms the heat transfer section 16. Therebetween the section having had the gradual thickness change before compression forms the transition section 18 after compression.

While FIG. 1 and 2 show the formation of a metal foam material having one contacting section 14, one transition section 18 and one heat transfer section 16, it is to be understood that in the electrically heatable metal foam component 10 preferably two contacting sections 14 and two transition sections 18 are provided per heat transfer section 16. For simplicity, only the formation of one contacting section 14 and one transition section 18 is shown.

The degree of compression, i.e. the change from thickness T1 to thickness T2 in FIG. 1 and from thickness T3 to T4 may vary widely, depending on the type of metal foam material 12, especially on the density, i.e. porosity, of the uncompressed metal foam material 12. A relatively dense metal foam material 12, having a porosity of e.g. 60% as defined below, may already achieve the advantageous effects of the present invention by compressions corresponding to a thickness reduction of less than 60%. However, in particular for high porosities, e.g. of greater than or equal to 70%, particularly preferably greater than or equal to 80%, and very particularly preferably greater than or equal to 85% and most preferably it may be 95% or greater, the degree of compression is in particular as indicated above, i.e. at least 60%, in particular at least 70%, at least 75%, or at least 85%.

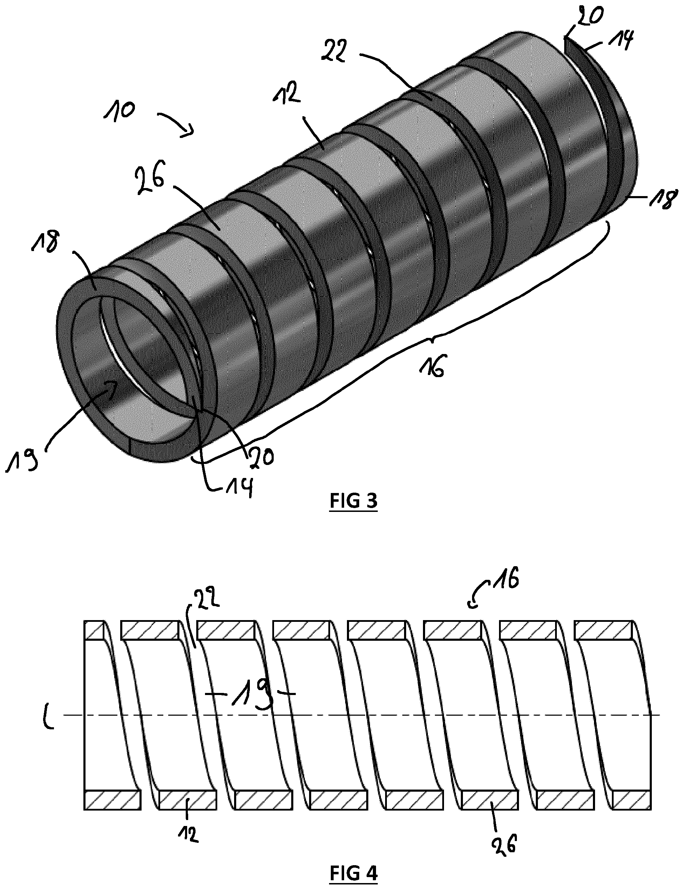

FIG. 3 shows a preferred embodiment of the present invention, in which the metal foam material 12 is in a helical shape. FIG. 4 shows a cross sectional view of the metal foam material 12 of FIG. 3. The helically shaped strip 26 of metal foam shown in FIG. 3 and FIG. 4 can be obtained for example by cutting a tubular shaped metal foam body, to provide a helical cut 22, winding like the thread of a screw along a longitudinal axis l. The longitudinal ends 20 of the helically shaped strip 26 of metal foam material 12 can only be seen in FIG. 3. The width of the strip of the metal foam material 12 is substantially uniform in the heat transfer section and gradually decreases towards these longitudinal ends 20, due to compression of the metal foam material. Thereby a contacting section 14 and a transition section 18 are provided on both sides of the heat transfer section 16. The metal foam material 12, in particular the heat transfer section 16, is wound around a radial inner section 19 in a longitudinal direction along longitudinal axis l. An electric current which is coupled into the metal foam material at one contacting section 14, e.g. by connected cables which are not shown in the drawings, travels through the adjacent transition section 18 and the heat transfer section 16 towards the transition section 18 and the contacting section 14 at the opposing longitudinal end. As can be recognized especially from FIG. 4, due to the helical cut 22, the path of the electric current is long and the cross section of the metal foam material 12 is reduced, since the helical cut 22 electrically isolates neighboring sections of the helically wound metal foam material from one another. Thereby a more homogenous heating is achieved. The cut 22 may be filled with insulating material in order to increase the mechanical stability and to avoid short circuits between neighboring strut portions e.g. due to bending the helically wound metal foam material 12. As an alternative to coupling an electric current via a cable into the metal foam material 12, it is also possible to heat the metal foam material 12 by inductive heating. In such a case, an induction coil can be placed inside the reactor itself or attached to the outer wall of a reactor according to the invention. In the second case, the reactor device may comprise a wall material with low electric conductivity as for ex. ceramics, glas ceramics, glas, metallic glass allowing magnetic permeability to the reactor filling. The reactor filling may be formed by a bulk of shaped metallic or alloy foam bodies, as for example stacked plates, a single monolith, a series of monoliths or any other shape described for metallic foam within this description.

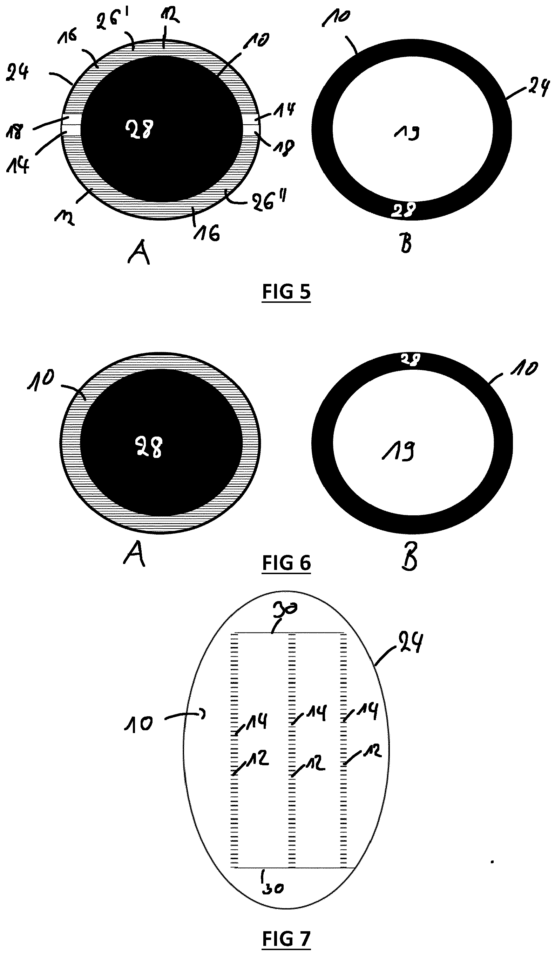

While FIG. 3 and 4 show an embodiment having a single cut, it is also possible to start from a tubular metal foam material and providing two helical cuts. Thereby a double helix of two strips of metal foam material is formed (not shown in FIG. 3 and FIG. 4). In comparison to a single cut, the cross section of the metal foam material 12 is further reduced by providing more than a single cut. This may be advantageous for larger diameters of the helical structure, in order to reduce the cross sectional area of the metal foam material, thereby providing a more uniform heating. Multiple helical strips (26' and 26" in FIG. 5A) of the metal foam material may be connected to one another in a parallel circuit or in a serial circuit. It was found that a parallel coupling is in particular suitable for EHCs having a length of the heat transfer section of greater than 10 times their diameter. For EHCs having a length of less than 10 times their diameter, a serial circuit and the resulting meandering path of the electric current may be advantageous. The electric circuits and connectors are not shown in the drawings.

FIG. 5A and FIG. 5B show an embodiment of an EHC 10 in accordance with the present invention, specifically longitudinal views of the EHC are shown. The EHC 10 is arranged along the outer circumference of a reactor wall 24. The reactor wall 24 may have a round cross section, or may be slightly elliptical, such as shown in FIG. 5A and FIG. 5B. FIG. 5A shows an upstream end of the EHC, i.e. the longitudinal view from an upstream end towards a downstream end. Similar as shown in FIG. 3 and FIG. 4, the metal foam material 12 is in a helical shape, however, two helical strips 26' and 26" of metal foam material are provided, forming a double helix. Also contacting sections 14 and transition sections 18 are provided on each of the two helical strips 26' and 26" which are schematically shown in FIG. 5A. As shown in FIG. 5A. A first strip 26' of metal foam material begins at a contacting section 14 and transitions via transition section 18 into a heat transfer section 16. The first strip 26' winds in clockwise direction into the paper plane. It goes beyond the contacting section 14 of the second strip 26". The second strip 26" equally begins at a contacting section 14 and transitions via transition section 18 into a heat transfer section 16. The second strip 26" winds in clockwise direction into the paper plane and goes beyond the contacting section 14 of the first strip 26'. The radially inner section at the upstream end of the EHC is provided with a fluid impermeable section 28, for example in the form of a lid, indicated in black in FIG. 5A. At the downstream end of the EHC 10, which is shown in FIG. 5B, the contacting section 14, the heat transfer section 16 and the transition section 18 cannot be recognized since they are covered by another fluid impermeable section 28. The fluid impermeable section 28 covering the upstream end may cover only the upstream face or may extend into the void radial inner section 19 of the EHC. A fluid (not shown in the drawings) flowing from an upstream end to a downstream end is first blocked by the fluid impermeable section 28 shown in FIG. 5A from directly flowing into the radial inner section of the EHC 10. Instead, the fluid is forced to flow through the porous metal foam material 12 at the reactor wall. Since the metal foam material 12 at the downstream end of the EHC 10 is covered by a fluid impermeable section 28, the fluid is further forced to flow into the radial inner section 19 of the EHC. Thereby the fluid is forced to flow through the metal foam material. This may be advantageous to improve the heat transfer efficiency or to subject the fluid to a catalytic treatment with either the metal foam material itself being the catalyst or being a carrier for a catalyst, i.e. catalytic particles are provided in the pores of the metal foam material. When the fluid impermeable section 28 at the upstream end fills also a part of the radial inner section 19, the length of the flow through of a fluid through the metal foam material can be increased. Though not indicated in Fig. 5A and B, the EHC is electrically isolated or insulated from the reactor wall 24, either by providing a gap there between or by arranging an electrically insulating material there between.

FIG 6A and 6B show an embodiment of an EHC in accordance with the invention, similar to FIG. 5A and FIG. 5B. However, the metal foam material has a tubular shape, i.e. does not have a helical cut 22. The contacting section 14 and transition section 18 are not shown for reasons of simplicity. The flow of the fluid is also here forced through the metal foam material in the heat transfer section 16, such as explained above for FIG. 5A and FIG. 5B.

A further embodiment of an EHC in accordance with the present invention is shown in FIG. 7. In this embodiment, the metal foam material 12 of EHC is provided in the form of three metal foam plates which are arranged inside an elliptically shaped reactor. It is to be understood that the shape of the reactor may also have another shape, e.g. a circular shape or any other shape. Also, the number of plates can vary and may be one or more, two or more, three or more and so on. The plates of the reactor are arranged at an angel of around 0° relative to the flow direction or a fluid flowing through the reactor. At two adjacent ends, the plates are connected to a frame 30, e.g. a metal frame. Contacting sections 14 and transition sections 18 are provided at each plate of metal foam material 12 where the metal foam material is connected to the frame 30 but are not shown in FIG. 7 for reasons of simplicity. At one side, the metal frame 30 is not electrically connected to the reactor wall, i.e. electrically insulated from the reactor wall, whereas at the other side, the frame 30 is electrically connected to the reactor wall. At the side where the frame 30 is not connected to the reactor wall, the frame may be connected to an electric conductor, such as a cable, to transport the electric current either into or out of the EHC.

The EHC can be heated by coupling an electric current into the plates of metal foam material 12 via the reactor wall and the frame 30. The electric current flows through the metal foam materials and thereby electrically heats these plates. Since the plates have an orientation of around 0° relative to the flow direction of a fluid flowing through the reactor, the fluid flows over the surface of the metal foam plates and is thereby heated without entering the metal foam material 12 itself.

In the following an experiment for determining the degree of compression for a metal foam material is described.

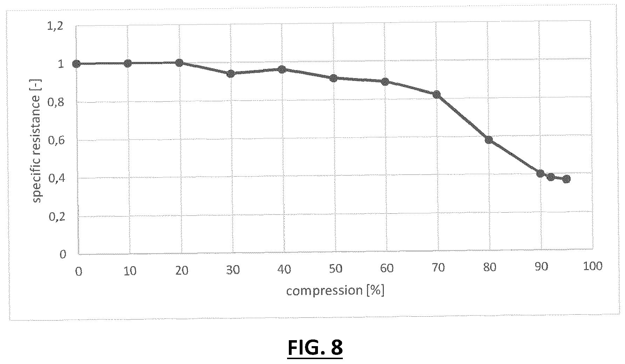

An electrode was attached to the end of each test strip of a metal foam material of a nickel-iron-chromium-aluminum alloy, having a pore size of 800 µm and a strut thickness of 55 µm, the porosity of the metal foam material was in the rage of 5 to 15 %. The aim was to find out whether compression at the connection to the electrode would have a noticeable effect on the electric resistance. Several specimens were specifically compressed at the junction. The result was a reduced resistance only at high compressions. It can be recognized from FIG. 8 that for this specific type of metal foam, the degree of compression should be at least 70% in order to reduce the observed electric resistance.

Without being bound by a theory, it is believed that this observation can be explained as follows. When the electric current is coupled to only one strut at the surface, this strut or the metal foam is mainly responsible for the resistance. Parallel running struts are not used by the electric current, because they do not lie in the direction of the current flow. Cross-sections of the cell structures at different degrees of compression have shown that the cells arranged one above the other, which form the foam structure, only collapse in their center. This means that the cell structure is deformed, but contact between the struts only occurs at higher degrees of compression. Thus, all pre-compressions for a current coupling at an electrode with a degree of compression below a certain threshold level are not effective.

If the material is compressed in the area of the fixation by at least 70%, but preferably by at least 85%, the thermal load at the contact point to the electrode is massively reduced. This leads to significantly improved durability of the entire component. Since the mechanical stability of the foam is given by the interconnected network of cells, the compression must be carried out in such a way that the network and its connections remain intact, for example in a gradual way to provide a transition section 18. Step-like compression would damage the structure in parts due to the shear forces that occur.

The degree of compression depends on the material, fixation, shape and deformation direction of the heating element. Thus, compression results in a 'ductile zone' (contacting section) around the fixation point and a 'solid zone' (initial material, heat transfer section) - connected by a 'graded zone' (transition section). The amount of compression (0% to <100%) can be used to shape the 'ductile zone' to improve the mechanical load capacity of the EHC. The 'graded zone' can be either linear, i.e. along a rectangular area with a steady increase in compression, or a (sinusoidal) curve with a progressive increase. The 'graded zone' ensures a functional transition and an optimal, uniform coupling of the current from the 'ductile' to the 'solid zone' by keeping all traces (struts) intact. In the 'ductile zone', the foam is electrically contacted. The formation of the 'ductile zone' compresses the cells to such an extent that several superimposed struts - which were previously arranged separately in space - are now contacted with each other, thus increasing the effective (utilized) conductor cross-section. The series of contacts in the 'ductile zone' and the smooth transition from the 'graded' to the 'solid zone' result in a heating element with uniform electrical conductivity properties and a resulting homogeneous heat generation over a wide area. This leads to a significantly longer service life of the EHC.

The higher density of the 'ductile zone' also simplifies contacting, e.g. by resistance welding or screws. In the original state of the foam, this is reserved for experts only.

### Example for a helical EHC:

In the Example, a reactor with a length of 900 mm and an internal diameter of 120 mm was used. The metal foam in the heat transfer section of the EHC had a wall thickness of 5 mm and a pore size of 1500 µm. A NiCrAl alloy was used. The diameter of the helically shaped heat transfer section was 80 mm on the inside and 90 mm on the outside. The heating element was designed as a double helix. This means that it had two circumferential foam strips insulated from each other, which were electrically connected in parallel at their ends. Each strip had a contacting section and a transition section at each end thereof. A cap at the end of the heating element was connected gas-tight to the two circulating helical metal foam strips forming the double helix. The cap also acted as the + pole of the electrical circuit. The inlet (in the direction of flow) of the helix was connected to the helix as a support ring, and at the same time this closed off the bypass past the helix to the fluid with an additionally attached steel ring. The support ring was in this construction the - pole. The EHC was connected to the reactor by said support ring. The total length of the helix was 290 mm. The helix was electrically loaded with 5000 watts. Ambient air was taken as the medium. The air mass flow rate in this reactor was 100 kg/h at 20 °C on the inlet side. A constant temperature of 83 °C was established at the reactor outlet.

In the following several embodiments of the present invention are explained. Embodiments 1 to 32 describe electrically heatable metal foam components (EHCs), embodiments 33 to 48 describe a reactor device and embodiments 50 to 52 describe processes for the treatment of a fluid.

Embodiment 1. Electrically heatable metal foam component, comprising metal foam material having at least one contacting section, for electrically contacting the metal foam material, at least one transition section and at least one heat transfer section, wherein the transition section is arranged between the contacting section and the heat transfer section, wherein in the contacting section the metal foam material is compressed in comparison to the heat transfer section, and wherein in the transition section the degree of compression changes from the degree of compression in the contacting section towards the metal foam material in the heat transfer section.

Embodiment 2. Electrically heatable metal foam component according to embodiment 1, wherein the number of heat transfer sections is half the number of transition sections and contacting sections, wherein each heat transfer section transits via two transition sections provided at separate portions of the heat transfer section into two contacting sections.

Embodiment 3. Electrically heatable metal foam component according to embodiment 1 or 2, wherein a length of the transition section is at least 0.3 times, in particular at least 0.5 times the thickness of the metal foam material at the heat transfer section at a position adjacent to the transition section.

Embodiment 4. Electrically heatable metal foam component according to embodiment 2, wherein a length of the transition section is in the range of 1.0 to 5.0 times the thickness of the metal foam material at the heat transfer section at a position adjacent to the transition section.

Embodiment 5. Electrically heatable metal foam component according to at least one of the preceding embodiments, wherein more than one heat transfer sections are electrically connected via transition section(s) and contacting section(s).

Embodiment 6. Electrically heatable metal foam component according to at least one of the preceding embodiments, wherein in the contacting section cells of the metal foam material are compressed to such an extent that superimposed struts which were before compression arranged separately in space are in direct contact with one another after compression; and/or wherein the metal foam material in the contacting section is compressed such that its thickness is reduced by at least 60%, in particular by at least 70%, by at least 75%, by at least 85% of the thickness of uncompressed metal foam material.

Embodiment 7. Electrically heatable metal foam component according to at least one of the preceding embodiments, wherein the metal foam material in the heat transfer section has a thickness in the range of 1.0 to 100 mm, in particular from 1.5 to 75 mm, in particular from 1.5 to 50 mm.

Embodiment 8. Electrically heatable metal foam component according to at least one of the preceding embodiments, the porosity of the metal foam material in the heat transfer section is preferably greater than or equal to 70%, particularly preferably greater than or equal to 80%, and very particularly preferably greater than or equal to 85% and most preferably it may be 95% or greater.

Embodiment 9. Electrically heatable metal foam component according to at least one of the preceding embodiments, wherein the metal foam material at least in the heat transfer section has open pores.

Embodiment 10. Electrically heatable metal foam component according to at least one of the preceding embodiments, wherein the metal foam material at least in the heat transfer section has pores that have diameters of 10 µm to 10,000 µm, preferably of 50 µm to 3000 µm, particularly preferably of 100 µm to 1500 µm.

Embodiment 11. Electrically heatable metal foam component according to at least one of the preceding embodiments, wherein the metal foam material in at least the heat transfer section thereof has a tubular shape.

Embodiment 12. Electrically heatable metal foam component according to at least one of embodiments 1 to 10, wherein the metal foam material in at least the heat transfer section thereof has a helical shape, wherein preferably isolating material is arranged between neighboring strips of the helical shape.

Embodiment 13. Electrically heatable metal foam component according to embodiment 12, wherein the electrically heatable metal foam component comprises at least one, in particular at least two heat transfer sections having a helical shape.

Embodiment 14. Electrically heatable metal foam component according to embodiment 13, wherein at least two heat transfer sections having a helical shape are at least in a segment thereof parallel to one another so that at least a double helix of metal foam material is formed.

Embodiment 15. Electrically heatable metal foam component according to embodiment 12 or 14, wherein isolating material is arranged between the strip of the helically shaped metal foam material or between neighboring strips of the helical shaped metal form material of the at least double helix.

Embodiment 16. Electrically heatable metal foam component according to embodiment 14 or 15, wherein among the at least two heat transfer sections having a helical shape two helically shaped sections are essentially wound around the same axis, wherein one heat transfer section has a smaller radius and is located within a cavity of a heat transfer section having a larger radius.

Embodiment 17. Electrically heatable metal foam component according to any one of embodiments 14 to 16, wherein each of the at least two heat transfer sections having a helical shape are electrically connected to one another via contacting zones provided at each of the helically shaped heat transfer sections.

Embodiment 18. Electrically heatable metal foam component according to at least one of embodiments 1 to 10, wherein the electrically heatable metal foam component comprises at least one, in particular at least two heat transfer sections having a plate shape.

Embodiment 19. Electrically heatable metal foam component according to embodiment 19, wherein at least two heat transfer sections having a plate shape are arranged with a gap therebetween.

Embodiment 20. Electrically heatable metal foam component according to at least one of the preceding embodiments, wherein more than one heat transfer sections are connected to one another such that they form a parallel circuit. [>>10xD]

Embodiment 21. Electrically heatable metal foam component according to at least one of embodiments 1 to 19, wherein more than one heat transfer sections are connected to one another such that they form a serial circuit. [5 x D]

Embodiment 22. Electrically heatable metal foam component according to at least one of the preceding embodiments, wherein the metal foam component further comprises one or more electrically isolating part(s), between segments of the heat transfer section of said metal foam material.

Embodiment 23. Electrically heatable metal foam component according to embodiment 22, wherein the electrically isolating part(s) define an electric path through the metal foam material.

Embodiment 24. Electrically heatable metal foam component according to at least one of the preceding embodiments, wherein the metal foam element comprises one or more fluid impermeable part(s).

Embodiment 25. Electrically heatable metal foam component according to at least one of the preceding embodiments, wherein the one or more electrically isolating part(s) is/are fluid impermeable.

Embodiment 26. Electrically heatable metal foam component according to at least one of the preceding embodiments, wherein the electrically heatable metal foam component further comprises electrically conductive strips connected to the contacting section.

Embodiment 27. Electrically heatable metal foam component according to at least one of the preceding embodiments, wherein catalyst particles are arranged within the open pores of the metal foam.

Embodiment 28. Electrically heatable metal foam component according to at least one of the preceding embodiments, wherein the metal foam material comprises at least one catalytically active material in particular for converting gaseous and/or liquid reactants.

Embodiment 29. Electrically heatable metal foam component according to at least one of the preceding embodiments, wherein the catalytically active material is deposited in the form of catalytic particles on the metal foam material.

Embodiment 30. Electrically heatable metal foam component according to at least one of the preceding embodiments, wherein the metal foam material is the catalytically active material.

Embodiment 31. Electrically heatable metal foam component according to at least one of the preceding embodiments, wherein the metal foam material comprises at least one of the elements Ni, Fe, Cr, Al, Nb, Ta, Ti, Mo, Co, B, Zr, Mn, Si, La, W, Cu, Ag, Au, Pd, Pt, Zn, Sn, Bi, Ce, and/or Mg preferably comprises at least one of the elements Ni, Fe, Cr and/or Al and particularly preferably at least one of the elements Ni and/or Al.

Embodiment 32. Electrically heatable metal foam component according to at least one of the preceding embodiments, wherein the metal foam material is a nickel-iron-chromium-aluminum (NiFeCrAl) alloy or a nickel-chromium-aluminum (NiCrAl) alloy.

Embodiment 33. Reactor device, having a defined flow path for a fluid, delimited by walls of the reactor device, wherein said flow path guides the at least one fluid through the reactor device, and wherein an electrically heatable metal foam component according to at least one of the preceding embodiments is provided within the flow path.

Embodiment 34. Reactor device according to embodiment 33, wherein within the flow path the electrically heatable metal foam component has a downstream end and an upstream end, wherein the flow path from the upstream end to the downstream end of the electrically heatable metal foam component passes through the metal foam material

Embodiment 35. Reactor device according to embodiment 33 or 34, wherein the metal foam component is designed and arranged such that the at least one fluid passes from a radial outer side of the metal foam material to a radial inner side of the metal foam material, or wherein the metal foam component is designed and arranged such that the at least one fluid passes from a radial inner side of the metal foam material to a radial outer side of the metal foam material.

Embodiment 36. Reactor device according to at least one of embodiments 33 to 35, wherein the walls of the reactor device define a tubular flow path and in the electrically heatable metal foam component, the metal foam material in at least the heat transfer section thereof has a tubular shape being arranged essentially concentrically with the tubular flow path defined by the reactor walls.

Embodiment 37. Reactor device according to at least one of embodiments 33 to 35, wherein the walls of the reactor device define a tubular flow path and in the electrically heatable metal foam component, the metal foam material in at least the heat transfer section thereof has a helical shape being arranged essentially concentrically with the tubular flow path defined by the reactor walls.

Embodiment 38. Reactor device according to at least one of embodiments 33 to 35, wherein the electrically heatable metal foam component comprises at least one heat transfer section having a plate shape, wherein the at least one plate shaped heat transfer section is arranged essentially parallel to the flow direction of the flow path.

Embodiment 39. Reactor device according to at least one of embodiments 33 to 38, wherein the electrically heatable metal foam component has a length in the range of 1.0 mm to 500 mm, preferably 10 mm to 400 mm, more preferably of 20 to 300 mm when being designed such that the fluid passes through or flows along the metal foam in an axial direction of the reactor device or
wherein the electrically heatable metal foam component has a length in the range of 5.0 mm to 5000 mm, more preferably in the range of 30 mm to 2000 mm, even more preferably in the range 50 mm to 1000 mm when being designed such that the fluid passes through or flows along the metal foam in an radial direction of the reactor device.

Embodiment 40. Reactor device according to at least one of embodiments 33 to 39, wherein in the reactor device the metal foam is electrically connected to at least two electrodes so that the metal foam is heatable when conducting an electric current through it by an electrical resistance.

Embodiment 41. Reactor device according to at least one of embodiments 33 to 39, wherein in the reactor device comprises an induction heater, for induction heating the metal foam.

Embodiment 42. Reactor device according to at least one of embodiments 33 to 39, wherein the reactor device further comprises an electromagnetic wave generator for dielectric heating the metal foam.

Embodiment 43. Reactor device according to embodiment 42, wherein the electromagnetic waves are microwaves.

Embodiment 44. Reactor device according to at least one of embodiments 33 to 43, wherein the reactor device is designed for a continuous flow of at least one fluid.

Embodiment 45. Reactor device according to at least one of embodiments 33 to 44, wherein the metal foam is contained within a reaction chamber of the reactor device.

Embodiment 46. Reactor device according to at least one of embodiments 33 to 44, wherein the metal foam is arranged upstream of a reaction chamber of the reactor device.

Embodiment 47. Reactor device according to at least one of embodiments 33 to 46, wherein further a catalyst is arranged downstream of the metal foam.

Embodiment 48. Reactor device according to at least one of embodiments 33 to 47, wherein the reactor device is for treating exhaust gas of an internal combustion engine, or for treating exhaust gas of an industrial process, or for supplying heat to an industrial process.

Embodiment 49. Process for the treatment of a fluid, wherein the fluid flows through a reactor device according to any of embodiments 33 to 48.

Embodiment 50. Process according to embodiment 49, wherein the gas is an exhaust gas emitted by an internal combustion engine of by an industrial process.

Embodiment 51. Process according to embodiment 50, wherein the internal combustion engine is an engine of a vehicle, in particular of a hybrid vehicle.

Embodiment 52. Process according to embodiment 51, wherein the fluid comprises water vapor and methane, in particular wherein the process is a steam methane reforming process.

### Reference Signs

- 10: electrically heatable metal foam component
- 12: metal foam material
- 14: contacting section
- 16: heat transfer section
- 18: transition section
- 19: radial inner section
- 20: longitudinal ends
- 22: helical cut
- 24: reactor wall
- 26: helical strip
- 26': first helical strip
- 26": second helical strip
- 28: fluid impermeable section
- 30: frame
- l: longitudinal axis

## Claims

1. Electrically heatable metal foam component (10), comprising metal foam material (12) having
at least one contacting section (14), for electrically contacting the metal foam material (12),
at least one transition section (18) and
at least one heat transfer section (16),
wherein the transition section (18) is arranged between the contacting section (14) and the heat transfer section (16),
wherein in the contacting section (14) the metal foam material (12) has a higher density, in particular is compressed, in comparison to the heat transfer section (16), and
wherein in the transition section (18) the degree of densification changes from the degree of densification in the contacting section (14) towards the metal foam material in the heat transfer section (16).

2. Electrically heatable metal foam component (10) according to claim 1,
wherein in the transition section (18) of the metal foam material (12) struts thereof are undisrupted; and/or
wherein a length of the transition section (18) is at least 0.3 times the thickness of the metal foam material (12) at the heat transfer section (16) at a position adjacent to the transition section (18).

3. Electrically heatable metal foam component (10) according to claim 1 or 2, wherein more than one heat transfer sections (16) are electrically connected via transition section(s) (18) and contacting section(s) (14).

4. Electrically heatable metal foam component (10) according to at least one of the preceding claims,
wherein in the contacting section (14) cells of the metal foam material (12) are compressed to such an extent that superimposed struts are in direct contact with one another after compression; and/or
wherein the metal foam material (12) in the contacting section (14) is compressed such that its thickness is reduced by at least 60%, in particular by at least 70%, by at least 75%, by at least 85% of the thickness of uncompressed metal foam material (12).

5. Electrically heatable metal foam component (10) according to at least one of the preceding claims,
wherein the metal foam material (12) in the heat transfer section (16) has a thickness in the range of 1.0 to 100 mm, in particular from 1.5 to 75 mm, in particular from 1.5 to 50 mm.

6. Electrically heatable metal foam component (10) according to at least one of the preceding claims,
the porosity of the metal foam material (12) in the heat transfer section (16) is greater than or equal to 70%, particularly preferably greater than or equal to 80%, and very particularly preferably greater than or equal to 85% and most preferably it may be 95% or greater.

7. Electrically heatable metal foam component (10) according to at least one of the preceding claims,
wherein the metal foam material (12) at least in the heat transfer section (16) has pores that have diameters of 10 µm to 10,000 µm, preferably of 50 µm to 5000 µm, particularly preferably of 300 µm to 3000 µm, most preferably of 1500 µm to 3000 µm.

8. Electrically heatable metal foam component (10) according to at least one of the preceding claims,
wherein more than one heat transfer sections (16) are connected to one another such that they form a parallel circuit.

9. Electrically heatable metal foam component (10) according to at least one of claims 1 to 7,
wherein more than one heat transfer sections (16) are connected to one another such that they form a serial circuit.

10. Electrically heatable metal foam component (10) according to at least one of the preceding claims,
wherein the metal foam component further comprises one or more electrically isolating part(s), for example void gaps or insulating material, between segments of the heat transfer section (16) of said metal foam material (12).

11. Electrically heatable metal foam component (10) according to at least one of the preceding claims,
wherein catalyst particles are arranged within the open pores of the metal foam material (12).

12. Electrically heatable metal foam component (10) according to at least one of the preceding claims,
wherein the metal foam material (12) is the catalytically active material.

13. Electrically heatable metal foam component (10) according to at least one of the preceding claims,
wherein the metal foam material (12) comprises at least one of the elements Ni, Fe, Cr, Al, Nb, Ta, Ti, Mo, Co, B, Zr, Mn, Si, La, W, Cu, Ag, Au, Pd, Pt, Zn, Sn, Bi, Ce, Mg, Ru, Rh, Ir and/or Os preferably comprises at least one of the elements Ni, Fe, Cr and/or Al and particularly preferably at least one of the elements Ni and/or Al.

14. Reactor device having a defined flow path for a fluid, delimited by walls of the reactor device,
wherein said flow path guides the at least one fluid through the reactor device, and
wherein an electrically heatable metal foam component (10) according to at least one of the preceding claims is provided within the flow path.

15. Reactor device according to claim 14,
wherein the reactor device is for treating exhaust gas of an industrial process, or for supplying heat to an industrial process, or for treating exhaust gas of an internal combustion engine.
